# FASCICULE DE BREVET EUROPEEN

(11) **EP 1 190 549 B1**
(45) Date de publication et mention de la délivrance du brevet: **06.08.2008**
(21) Numéro de dépôt: 00949553.2
(22) Date de dépôt: 16.06.2000
(51) Int. Cl.: H04L 29/06

(54) **PROCEDE ET SYSTEME D'ACCES SECURISE A UN SERVEUR INFORMATIQUE**
VERFAHREN UND VORRICHTUNG ZUM GESICHERTEN ZUGRIFF ZU EINEM SERVER
METHOD AND SYSTEM FOR SECURELY ACCESSING A COMPUTER SERVER

(30) Priorité: 16.06.1999 FR 9907613
(43) Date de publication de la demande: 27.03.2002
(73) Titulaire: Lenoir, Olivier, 78180 Montigny le Bretonneux (FR); Cour, Jean-Michel, 91400 Orsay (FR)
(72) Inventeur: Lenoir, Olivier, 78180 Montigny le Bretonneux (FR); Cour, Jean-Michel, 91400 Orsay (FR)
(74) Mandataire: Pontet, Bernard
(86) Numéro de dépôt international: PCT/FR2000/001681
(87) Numéro de publication internationale: WO 2000/078009

(56) Documents cités:
- EP-A- 0 818 915
- WO-A-97/31306
- DE-A- 19 724 901
- NL-C- 1 007 409

## Description

La présente invention concerne un procédé permettant d'augmenter le niveau de sécurisation du protocole d'authentification du demandeur d'accès à un serveur informatique. Elle concerne également un système d'accès sécurisé mettant en oeuvre ce procédé.

Un demandeur d'accès ou client utilise en pratique un ordinateur individuel ou un poste de travail muni de moyens de connexion à un réseau de communication, par exemple le réseau Internet.

Un serveur informatique est constitué d'un ordinateur muni de moyens de connexion au même réseau. Il sert à mettre en relation le client avec divers services tels que des bases de données.

Une procédure d'accès à un serveur pour un client se déroule classiquement en trois phases :
- l'accès au site serveur via l'établissement d'une connexion (par exemple TCP/IP), via un réseau généraliste ou privé de transmission de données (par exemple Internet) ;
- l'entrée d'une identification ; et
- l'entrée d'un mot de passe client.

L'accès est refusé si le couple [identification / mot de passe client] n'est pas conforme aux informations stockées dans une base de données dite d'"authentification " gérée par le serveur lui-même ou par un serveur intermédiaire adapté.

Les procédures connues présentent un certain nombre de faiblesses vis-à-vis de malveillances, telles que le vol des couples [code d'identification / mot de passe] via un logiciel de recherche automatique de mot de passe ou une complicité du côté " serveur " permettant de connaître le contenu de la base de données d'authentification.

Diverses solutions sont connues pour renforcer la sécurisation de l'accès :
- côté serveur un dispositif auxiliaire permettant la génération de mots de passe aléatoires et/ou cryptés, mais nécessitant la possession par le client d'un appareil synchronisé avec le serveur, générant un mot de passe pseudo-aléatoire et de courte durée de vie en fonction de la date et de l'heure ;
- la dotation des ordinateurs individuels d'un périphérique lecteur d'une carte électronique (" carte à puce "), sécurisant l'accès selon un protocole similaire à celui utilisé pour les cartes bancaires ; le client doit donc disposer d'une telle carte et d'un périphérique spécial sur le terminal à partir duquel il se connecte au réseau ;
- l'identification de la machine du client par un code d'identification tel que celui intégré par le constructeur sur ses microprocesseurs ; l'accès est sécurisé par identification du ou des composants connus du serveur ; l'inconvénient est qu'en dehors des machines dûment répertoriées, le client ne peut effectuer aucun accès.

Par ailleurs, les systèmes de cryptage connus, tels que l'algorithme RSA, nécessitent des puissances de calcul importantes pour obtenir un bon niveau de sécurité.

On connaît par le document W09731306 un procédé pour fournir à un client des données d'authentification au moyen de services de transmission de message SMS sur son téléphone portable. via un réseau de téléphonie mobile.

Le document US5668876 divulgue un procédé pour authentifier un utilisateur d'un site fournisseur de service électronique connecté sur un réseau de communication, cet utilisateur détenant un téléphone portable. Ce procédé d'authentification comprend :
- une étape de transmission d'un code de demande sur un second réseau de communication, par exemple un réseau de téléphonie mobile, ce code étant reçu sur une unité personnelle de l'utilisateur requérant,
- une étape de génération, au sein de l'unité personnelle de l'utilisateur, d'un code de réponse, fondée sur un algorithme ayant comme variables d'entrée le code de demande reçu et une donnée entrée par l'utilisateur,
- une étape de génération, au sein de l'unité personnelle, d'un code de sortie comprenant le code de réponse, ce code de sortie étant alors soit transmis à partir de l'unité personnelle vers le centre d'authentification, soit entré sur un terminal de l'utilisateur relié au premier réseau de communication,
- une étape de comparaison au sein du centre d'authentification entre le code de réponse reçu et le code de réponse attendu, et
- une étape pour permettre l'accès au service électronique en cas de comparaison satisfaite.

Les procédés de sécurisation ou d'authentification précités présentent l'inconvénient de nécessiter une coopération active d'un opérateur de téléphonie mobile et parfois une adaptation des équipements de communication mobile mis en oeuvre dans ces procédés.

Le document NL 1 007 409 décrit un procédé consistant à transmettre par un réseau de communication, d'un client vers un serveur, des données d'authentification, le serveur requérant en retour du client l'envoi de son numéro de téléphone mobile. Le serveur envoie ensuite au client un message SMS contenant un code d'authentification que le client doit retourner au serveur pour authentification finale.

Un utilisateur pirate ayant connaissance des données d'authentification d'un client peut engager une procédure de connection au serveur et fournir n'importe quel numéro de téléphone portable en sa possession. L'utilisation du code d'authentification n'apporte dans ce cas aucun contrôle d'accès supplémentaire.

La présente invention a pour objet de proposer une autre solution qui ne nécessite pas l'intervention active d'un opérateur de téléphonie mobile et qui soit très fiable, très souple et peu coûteuse.

La présente invention propose un procédé d'accès sécurisé à un serveur informatique depuis un site client via au moins un premier réseau de communication, ce serveur comprenant des moyens pour gérer un protocole d'authentification d'un utilisateur du site client, comprenant une séquence de réception et le traitement de données d'identification d'un utilisateur du site client, et une séquence de transmission d'un message depuis le site serveur vers un équipement de communication détenu par l'utilisateur du site client via un second réseau de communication.

Suivant l'invention, ce message transmis est un message vocal destiné à être traité directement par ledit utilisateur et fournissant ainsi à l'utilisateur des moyens pour générer un mot de passe d'authentification prévu pour être transmis audit site serveur via l'un ou l'autre desdits premiers ou second réseaux de communication, le numéro d'appel dudit équipement de communication étant recherché dans une base de données d'authentification.

L'idée à la base de le présente invention est donc de faire intervenir dans le protocole d'authentification un téléphone mobile dans sa fonction de transmission vocale et non de transmission d'informations numériques ou de messages courts, le site serveur étant muni de moyens lui permettant d'appeler le téléphone mobile et de lui transmettre un message vocal.

Le premier réseau de communication peut être le réseau Internet et plus généralement tout réseau de communication filaire ou non filaire, par exemple un réseau de communication mobile.

Le second réseau de communication mis en oeuvre dans le procédé de sécurisation selon l'invention est de préférence un réseau de communication mobile, mais pourrait être un réseau de communication fixe capable de communiquer avec des équipements de communication mobile.

Le procédé selon l'invention n'exige du côté du site client aucun dispositif informatique spécial d'identification, intégré ou périphérique. Il requiert la possession d'un téléphone mobile ordinaire, appareil qui tend à se généraliser parmi les professionnels et les particuliers. Le coût d'équipement côté serveur reste également modeste puisque notamment un modem standard du type comportant une unité de synthèse vocale peut être utilisé pour réaliser la connexion avec le réseau de téléphonie mobile.

Un autre avantage selon l'invention réside dans le fait que ni le poste serveur, ni le poste client ne nécessitent de puissances de calcul importantes comparées aux systèmes de cryptage de l'état de la technique, d'où une forte réduction des coûts pour un système selon l'invention. On peut également prévoir une réduction des coûts de déploiement et surtout une absence de surcoût lors d'un changement des procédures par rapports aux solutions de sécurisation à base de matériel.

Il est à noter que la sécurisation apportée par le système selon l'invention est renforcée par la procédure d'identification du téléphone mobile lui-même par son réseau d'abonnement. Cette procédure met en oeuvre dans le cas de la norme GSM un composant électronique spécifique (carte SIM) branché sur l'appareil, et la possibilité pour le client d'avoir un mot de passe modifiable (code PIN) qui doit être saisi lors de la mise en marche du téléphone.

En cas de vol du téléphone mobile ou du composant SIM, celui-ci peut instantanément être mis hors service pour l'ensemble des réseaux GSM sur un simple appel au fournisseur d'abonnement du téléphone mobile. On pourra prévoir également que suivant une déclaration de vol, l'accès au réseau sera automatiquement fermé.

Le procédé selon l'invention permet de réutiliser les procédures existantes en ajoutant un niveau de sécurité. Il peut s'appliquer en complément de n'importe quel logiciel d'accès.

Ainsi, la donnée d'identification demandée au client peut être le couple [code d'identification / mot de passe client] (ID/MPC) du protocole d'authentification connu de l'état de la technique, de sorte que la connaissance directe ou indirecte de ce couple ne sera plus suffisante en soi pour obtenir l'accès au serveur.

Dans une première variante de réalisation, le procédé selon l'invention comprend les étapes consistant à :
- demander au site client des données d'identification via le premier réseau de communication ;
- traiter lesdites données et rechercher dans la base de données d'authentification un numéro d'appel d'un équipement de communication mobile détenu par l'utilisateur du site client ;
- appeler ledit équipement de communication mobile via au moins un second réseau de communication ;
- après établissement d'une communication avec ledit équipement de communication mobile, générer un mot de passe aléatoire ou pseudo aléatoire;
- émettre un message vocal comprenant ledit mot de passe aléatoire via le second réseau de communication;
- demander à l'utilisateur de fournir, à partir du site client via le premier réseau de communication, un mot de passe d'authentification dérivé dudit mot de passe aléatoire ou pseudo-aléatoire ; et
- authentifier ledit mot de passe d'authentification.

Le mot de passe d'authentification peut par exemple correspondre au mot de passe aléatoire ou pseudo-aléatoire généré par le serveur et communiqué via l'équipement de communication mobile.

Mais on peut aussi prévoir que le mot de passe d'authentification sera constitué par le mot de passe aléatoire ou pseudo-aléatoire généré par le serveur et communiqué via l'équipement de communication mobile, auquel est appliquée une clé connue du client utilisateur et comprise dans la base de donnée d'authentification du serveur, l'étape d'authentification comportant une étape de conversion dudit mot de passe d'authentification en mot de passe aléatoire ou pseudo-aléatoire par application de ladite clé.

La clé peut être une constante connue et personnelle par exemple ajoutée ou retranchée pour obtenir le mot de passe serveur. Il peut s'agir aussi d'une opération de logique, comme une permutation.

Les données d'identification demandées au client peuvent consister en un couple [code d'identification / mot de passe client].

L'étape qui consiste à demander au client le mot de passe d'authentification se déroule de préférence pendant une durée prédéterminée au delà de laquelle l'authentification est refusée.

Dans une autre variante de réalisation du procédé selon l'invention, ce procédé comprend les étapes côté site serveur consistant à :
- demander au site client des données d'identification via le premier réseau de communication;
- traiter lesdites données et rechercher dans une base de données d'authentification un numéro d'appel d'un équipement de communication mobile détenu par l'utilisateur du site client ;
- appeler ledit équipement de communication mobile via au moins un second réseau de communication ;
- en cas d'obtention de la communication avec ledit équipement de communication mobile, émettre un message vocal requérant l'envoi par l'utilisateur d'une clé de cryptage ;
- recevoir et reconnaître la clé de cryptage transmise par le client via des touches de l'équipement de communication mobile;
- décrypter à l'aide de ladite clé de cryptage un mot de passe d'authentification transmis par le client via le premier réseau de communication, ce mot de passe d'authentification résultant d'un cryptage d'un mot de passe client réalisé sur le site client au moyen de la clé de cryptage ; et
- authentifier le mot de passe client résultant du décryptage du mot de passe d'authentification.

On peut également prévoir de remonter via le second réseau de communication mobile des informations d'accès résultant du message vocal transmis par le serveur via ce second réseau et le réaliser de nombreuses façons. On peut par exemple prévoir le processus suivant :

Un message vocal émis par le serveur est reçu via le second réseau de communication par un client utilisateur sur son téléphone portable, en réponse à une requête transmise au serveur via le premier réseau de communication à partir d'un terminal connecté à ce réseau. Ce message vocal indique par exemple un élément d'information à traiter sur le terminal.

Le client utilisateur effectue alors un traitement prédéterminé (par exemple, une translation ou toute autre modification simple ou complexe) à l'élément d'information indiqué et le frappe ensuite sur le clavier de son téléphone portable.

Ce mode spécifique de mise en oeuvre du procédé de sécurisation selon l'invention est particulièrement adapté aux terminaux disposants de moyens de saisie rudimentaires tels que les terminaux de paiement électronique.

Suivant un autre aspect de l'invention, il est proposé un système de sécurisation d'accès à un serveur informatique depuis un site client via au moins un premier réseau de communication, mettant en oeuvre le procédé selon l'invention, ce système comprenant sur le site serveur des moyens pour gérer un protocole d'authentification d'un utilisateur du site client, des moyens pour recevoir et traiter des données d'identification d'un utilisateur du site client, et des moyens pour générer et pour transmettre un message depuis le site serveur vers un équipement de communication détenu par l'utilisateur du site client via un second réseau de communication, caractérisé en ce que ce système est agencé pour transmettre via le second réseau de communication un message vocal destiné à être traité directement par ledit utilisateur et fournissant audit utilisateur des moyens pour générer un mot de passe d'authentification prévu pour être transmis audit site serveur via ledit premier réseau de communication, des moyens étant prévus pour rechercher le numéro d'appel dudit équipement de communication dans une base de données d'authentification.

Ce système peut en outre avantageusement comprendre, dans une première variante de réalisation :
- des moyens pour rechercher, en réponse à une réception de données d'identification en provenance d'un site client requérant un accès, dans la base de données d'authentification le numéro d'appel d'un équipement de communication mobile détenu par l'utilisateur du site client ;
- des moyens pour appeler ledit équipement de communication mobile via au moins un second réseau de communication ;
- des moyens pour générer un mot de passe aléatoire ou pseudo aléatoire, et
- des moyens pour authentifier un mot de passe d'authentification en provenance du site client via le premier réseau de communication,
caractérisé en ce qu'il comprend en outre
- des moyens pour émettre un message vocal comprenant ledit mot de passe aléatoire via le second réseau de communication, et
- des moyens pour requérir de l'utilisateur dudit site client une fourniture, via le premier réseau de communication, d'un mot de passe d'authentification dérivé dudit mot de passe aléatoire ou pseudoaléatoire.

Dans une seconde variante de réalisation, le système selon l'invention peut avantageusement comprendre :
- des moyens pour demander au site client des données d'identification via le premier réseau de communication;
- des moyens pour traiter lesdites données et rechercher dans une base de données d'authentification un numéro d'appel d'un équipement de communication mobile détenu par l'utilisateur du site client ;
- des moyens pour appeler ledit équipement de communication mobile via au moins un second réseau de communication ;
- des moyens pour émettre un message vocal requérant l'envoi par l'utilisateur d'une clé de cryptage ;
- des moyens pour recevoir et reconnaître la clé de cryptage transmise par le client via des touches de l'équipement de communication mobile;
- des moyens pour décrypter à l'aide de ladite clé de cryptage un mot de passe d'authentification transmis par le client via le premier réseau de communication, ce mot de passe d'authentification résultant d'un cryptage d'un mot de passe client réalisé sur le site client au moyen de la clé de cryptage ; et
- des moyens pour authentifier le mot de passe client résultant du décryptage du mot de passe d'authentification.

On pourra également renforcer la sécurisation du procédé selon l'invention, en prévoyant la désactivation automatique de l'accès au serveur dès qu'un nombre prédéterminé de tentatives a échoué à l'une quelconque des étapes de saisie, et la possibilité de demander la désactivation immédiate du téléphone auprès du fournisseur de téléphonie mobile.

Suivant encore un autre aspect de l'invention, il est proposé une application du procédé de sécurisation selon l'invention dans un système d'authentification d'oeuvres numériques comportant des sites tierces parties de datation, d'authentification et d'archivage connectés à un premier réseau de communication, caractérisée en ce que chaque site tierce partie comprend localement des moyens logiciels prévus (i) pour transmettre sous forme vocale à un site client sollicitant une opération d'authentification des données de sécurisation via un équipement de communication mobile associé audit site client et connecté à un second réseau de communication, et (ii) pour recevoir dudit site client via le premier réseau de communication un mot de passe d'authentification résultant desdites données de sécurisation.

La présente invention sera mieux comprise et d'autres avantages apparaîtront à la lumière de la description qui va suivre de deux exemples de réalisation du système et des procédés associés selon l'invention, description faite en référence aux dessins annexés sur lesquels :
- la figure 1 est un schéma synoptique du premier exemple de réalisation du système selon l'invention ;
- la figure 2 est un organigramme du procédé d'authentification exécuté par le serveur mettant en oeuvre le système de la figure 1 ;
- la figure 3 montre schématiquement une page écran générée par le serveur et utilisée par le client pour la transaction d'authentification du procédé de la figure 2 ;
- la figure 4 est un schéma synoptique du second exemple de réalisation du système selon l'invention ;
- la figure 5 est un organigramme du procédé d'authentification exécuté par le serveur mettant en oeuvre le système de la figure 4 ;
- la figure 6 montre schématiquement une page écran générée par le serveur et utilisée par le client pour la transaction d'authentification du procédé de la figure 5 ; et
- la figure 7 est un schéma synoptique illustrant une application du procédé de sécurisation selon l'invention pour la protection juridique d'oeuvres numériques.

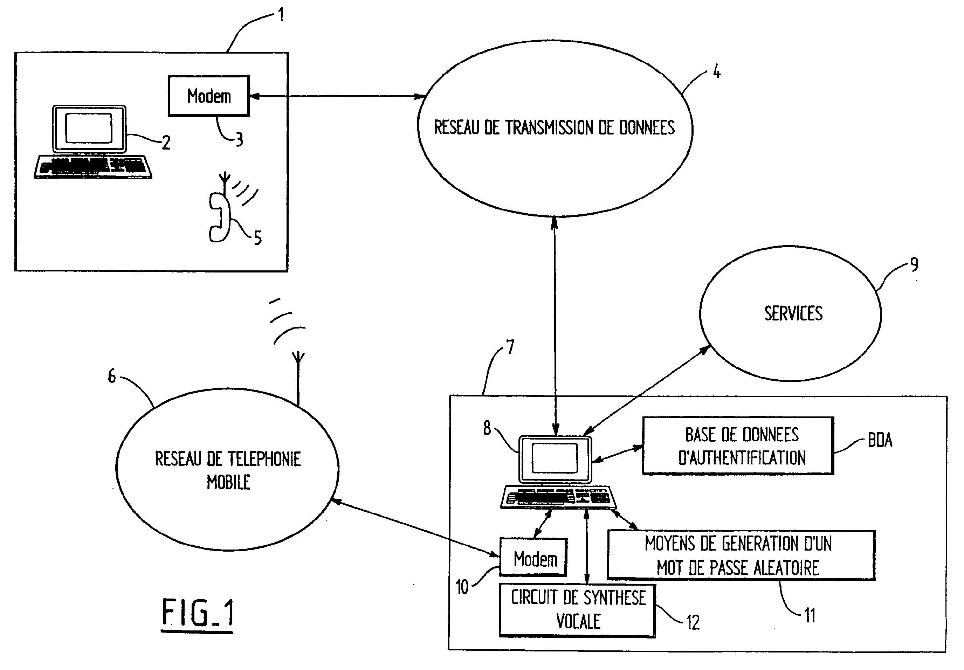

Comme illustré schématiquement à la figure 1, un premier exemple de réalisation du système selon l'invention comprend :
- sur un site client 1, un ordinateur individuel 2 équipé d'un modem 3 pour accéder à un réseau de transmission de données 4 et un téléphone mobile 5 personnel, abonné à un réseau de téléphonie mobile 6, par exemple au standard GSM ; et
- sur un site serveur 7, un serveur constitué d'un ordinateur 8 sur lequel est chargé un logiciel adapté à gérer le procédé d'accès du client aux services 9 du serveur selon l'invention, notamment le protocole d'authentification du client ; l'ordinateur est équipé d'un modem 10 lui permettant d'établir une liaison avec le réseau de téléphonie mobile 6 et d'appeler un numéro de téléphone, de moyens 11 de génération d'un mot de passe aléatoire ou pseudo-aléatoire MPA, et d'un circuit de synthèse vocale 12 lui permettant de communiquer au téléphone mobile 5 un message comprenant le mot de passe MPA généré aléatoirement nécessaire au protocole d'authentification. L'ordinateur 8 est relié à une base de données d'authentification BDA comprenant pour chaque client répertorié un triplet [code d'identification ID / mot de passe client MPC/numéro de téléphone mobile personnel associé].

Le procédé d'accès sécurisé se déroule de la manière suivante.

Le client sur le site client 1 demande l'accès au serveur. La liaison entre le site client 1 et le site serveur 7 via le réseau de transmission de données 4 se fait de manière classique et connue en soi par l'intermédiaire du modem 3 du site client 1, du réseau téléphonique commuté, d'un fournisseur d'accès au réseau généraliste Internet et d'Internet.

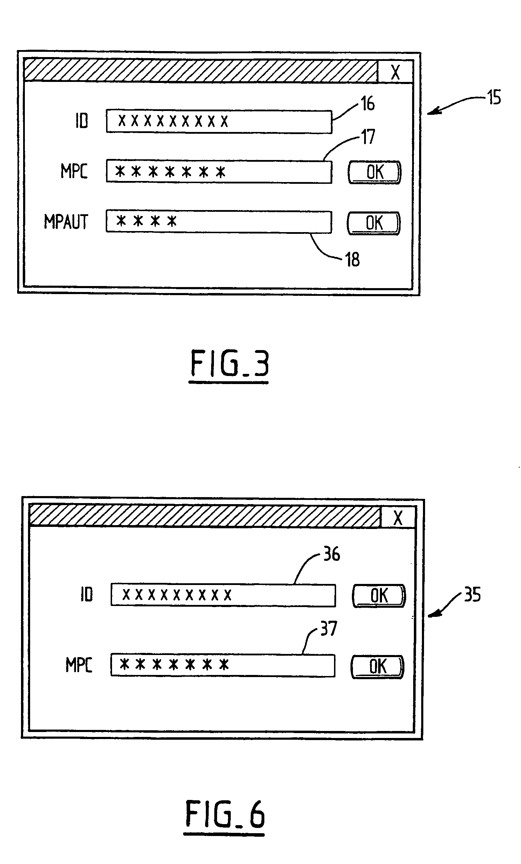

En retour, le serveur affiche sur l'ordinateur individuel 2 une page écran 15, représentée sur la figure 3, comprenant trois champs de saisie : les deux premiers champs 16 et 17 correspondent au couple classique [code d'identification ID et mot de passe client MPC], le troisième champ 18 correspond à un mot de passe d'authentification MPAUT qui est dérivé du mot de passe aléatoire ou pseudo-aléatoire MPA qui sera communiqué par le serveur au site client 1 via le téléphone mobile 5. Ce mot de passe d'authentification MPAUT correspond ici au mot de passe aléatoire ou pseudo-aléatoire MPA généré par le serveur.

Dans un premier temps, le client saisit son couple [code d'identification-mot de passe client] (ID/MPC) qui est déjà sécurisé par n'importe quel processus connu à partir de la base de données d'authentification BDA.

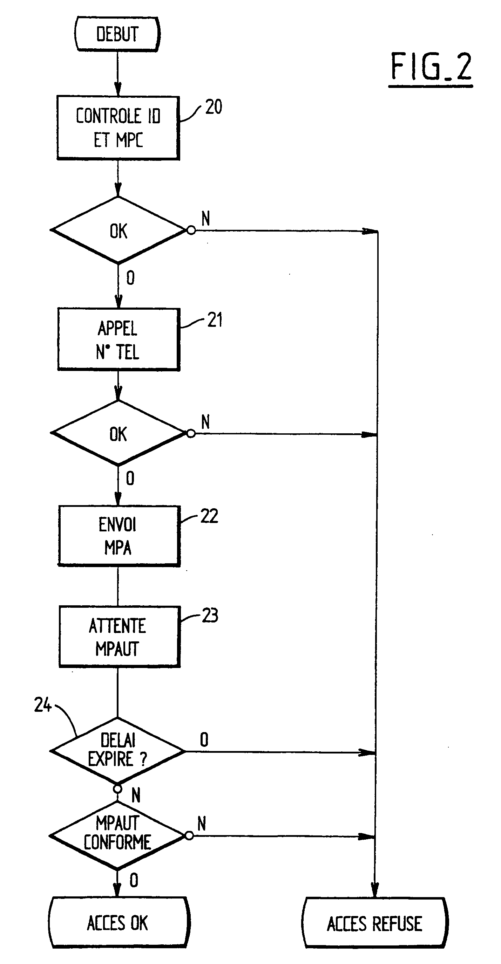

En se référant à l'organigramme de la figure 2, les étapes suivantes du protocole, spécifiques à la présente invention, ne seront exécutées par le serveur qu'à la condition préalable que l'étape de contrôle identification / mot de passe client à l'étape 20 soit couronnée de succès.

Si tel est le cas, l'étape suivante 21 consiste à composer le numéro du téléphone mobile identifié grâce à la base de données d'authentification BDA à l'aide du modem 10. A l'étape suivante 22, si la communication téléphonique avec le téléphone mobile est obtenue (par exemple par l'indication du " décrochage " par le modem 10 du site serveur), le serveur génère un mot de passe aléatoire MPA et émet grâce à son circuit de synthèse vocale ce mot de passe MPA généré vers le téléphone mobile 5. L'étape suivante 23 correspond à une étape d'attente de la saisie du mot de passe d'authentification MPAUT par le client au niveau du site client pendant une durée limitée prédéterminée (étape 24). Si à l'étape 25, le mot de passe MPAUT saisi est conforme, l'authentification est confirmée et le client peut accéder aux services 9 du serveur.

L'échec de l'authentification intervient donc dans les circonstances suivantes :
- échec de l'authentification classique du couple [ID /MPC] ;
- non-obtention de la communication avec le téléphone mobile ;
- mauvaise ou absence d'entrée du second mot de passe MPAUT dans le délai prédéterminé.

Des variantes de réalisation sont possibles, notamment concernant le mot de passe serveur dérivé du mot de passe aléatoire MPA qui peut être constitué dudit mot de passe aléatoire MPA auquel est ajoutée une clé arithmétique ou logique personnelle au client et comprise dans la base de données d'authentification BDA dans un champ supplémentaire à ceux déjà prévus pour le code d'identification ID, le mot de passe client MPC et le numéro de téléphone mobile. Le serveur sera équipé de moyens lui permettant de recalculer le mot de passe généré MPA pour procéder à l'étape d'authentification.

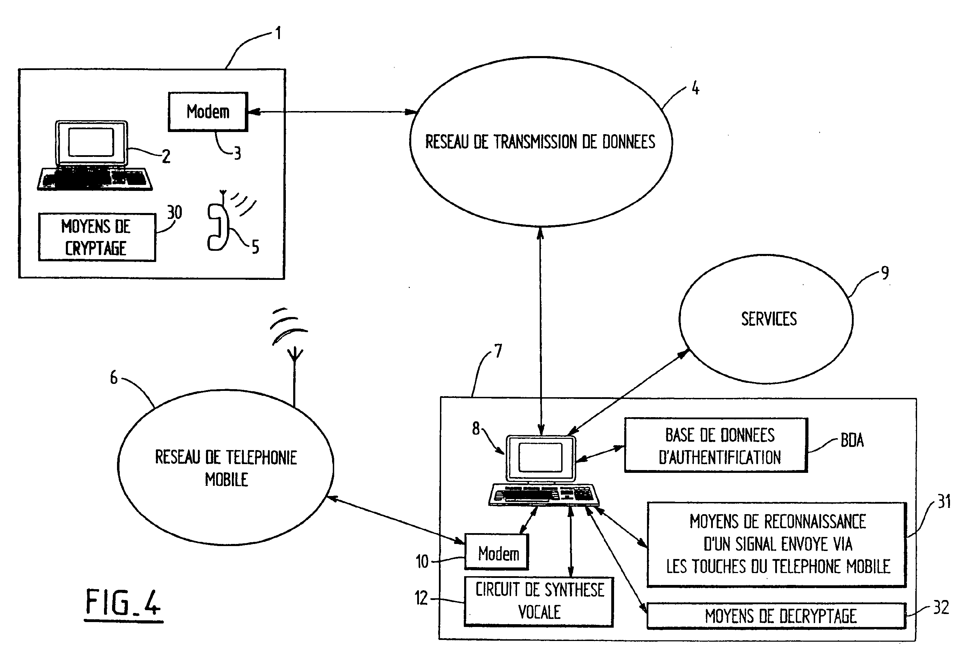

Les figures 4 à 6 concernent un autre mode de réalisation du système selon l'invention se différenciant par le fait que le site client 1 est équipé en outre de moyens de cryptage 30 qui sont adaptés à crypter le mot de passe client MPC une fois celui-ci saisi par le client avant de l'envoyer via le réseau 4 de transmission de données au site serveur 7. Du côté du site serveur, celui se différencie par des moyens de reconnaissance 31 d'un signal envoyé par le client via les touches de son téléphone mobile personnel 5 et des moyens de décryptage 32 adaptés à décrypter le mot de passe client MPC selon une clé de cryptage qui est transmise par le client via les touches de son téléphone mobile. La base de données d'authentification BDA ne comporte ici que deux champs contenant l'un le code ID et l'autre le mot de passe client MPC. Le protocole d'authentification après décryptage correspond au protocole connu dans l'art antérieur.

Le procédé d'accès sécurisé utilisant ce système se déroule de la manière suivante.

En réponse à une demande d'accès de la part du client utilisant le site client 1, le serveur affiche sur l'ordinateur individuel 2 une page écran 35 représentée à la figure 6, ne comprenant par rapport au premier mode de réalisation que deux champs de saisie 36 et 37 qui correspondent au couple classique [code d'identification ID et mot de passe client MPC]. Immédiatement après la saisie du mot de passe client MPC, les moyens 30 cryptent le mot de passe client saisi selon une clé de cryptage connue seulement du client. Ce mot de passe client crypté correspond au mot de passe dit d'authentification du procédé selon l'invention.

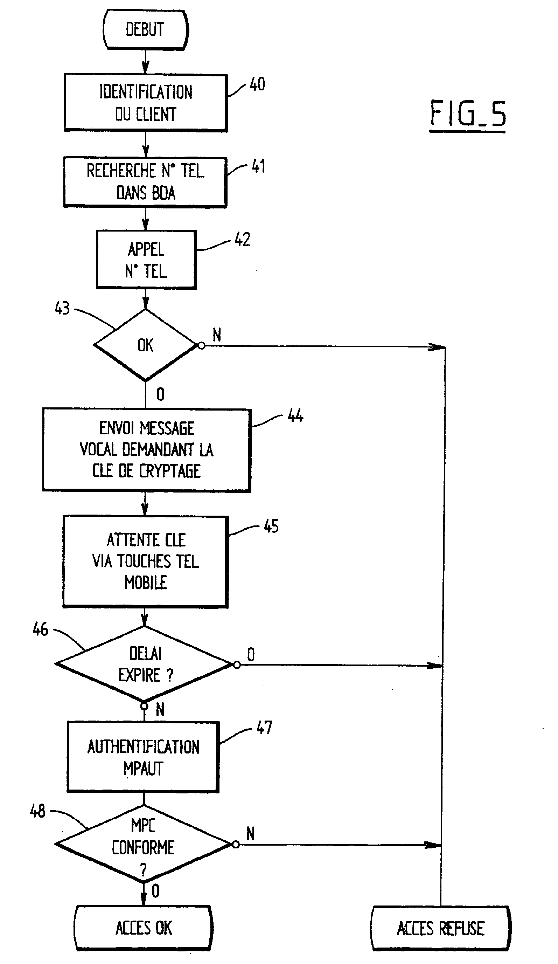

En se référant à l'organigramme de la figure 5, les étapes du protocole d'authentification se déroulent de la manière suivante.

Dans un premier temps, à l'étape 40, le serveur, ayant reçu le mot de passe client crypté et le code ID, identifie le client à l'aide du code d'identification ID, puis à l'étape 41, il recherche dans la base de données d'authentification BDA, le numéro de téléphone mobile. L'étape 42 suivante consiste à composer le numéro du téléphone mobile à l'aide du modem 10. Si à l'étape suivante 43 la communication avec le téléphone mobile est obtenue, le serveur émet grâce à son circuit de synthèse vocale 12 un message (étape 45) signalant qu'il attend de la part du client la clé de cryptage via les touches du téléphone mobile. L'étape 46 correspond à une étape d'attente de la saisie de cette clé pendant une durée limitée prédéterminée. L'étape suivante 47 consiste à authentifier le mot de passe MPAUT reçu via le réseau 4 par le décryptage de ce mot de passe avec la clé et l'authentification du mot de passe client obtenu, conformément au protocole d'authentification. Si le mot de passe client MPC est conforme (étape 48), l'authentification est confirmée et le client peut accéder aux services 9 offert par le serveur.

L'échec de l'authentification interviendra donc dans les circonstances suivantes :
- non-obtention de la communication avec le téléphone mobile ; et
- mauvaise ou absence d'entrée du mot de passe client MPC et de la clé de cryptage.

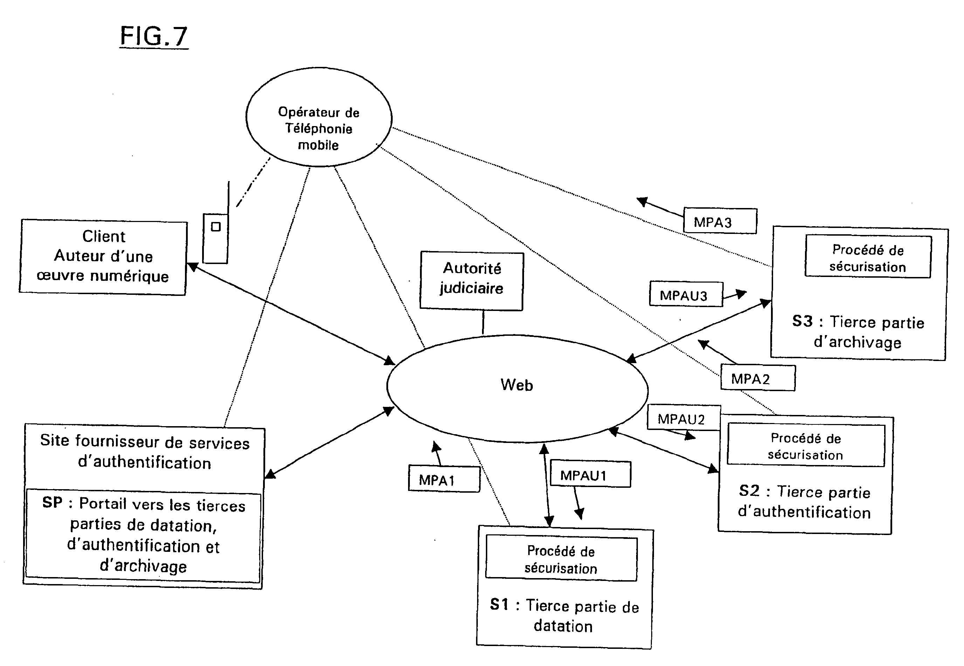

Le procédé de sécurisation selon l'invention peut trouver une application particulièrement intéressante lorsqu'il est mis en oeuvre dans le cadre d'un système de protection juridique et d'authentification d'oeuvres numériques représenté schématiquement en figure 7. Ce système, construit autour d'Internet et du web, comprend un premier site S1 procurant une fonction de tierce partie de datation, un second site S2 procurant une fonction de tierce partie d'authentification, et un troisième site S3 procurant une fonction de tierce partie d'archivage. Il peut en outre comporter, sans que cela soit pour autant indispensable, un site SP fournisseur de services d'authentification procurant une fonction de portail et d'aiguillage vers les différentes sites précités.

Chacune des sites tierces parties est équipé d'un logiciel implémentant le procédé de sécurisation selon l'invention. Lorsqu'un client auteur ou détenteur d'une oeuvre numérique sollicite chacun des sites tierces parties S1, S2, S3, soit directement soit via le site portail fournisseur de services SP, le procédé de sécurisation selon l'invention est exécuté avec fourniture à ce client via un réseau d'un opérateur de téléphonie mobile d'un mot de passe MPA1, MPA2, MPA3, puis émission par le client via Internet d'un mot de passe d'authentification MPAU1, MPAU2, MPAU3 destiné au site tierce partie sollicité. On peut bien sûr prévoir que l'autorité judiciaire puisse directement accéder en cas de besoin aux informations et données stockées dans les différentes sites tierces parties pour le compte des clients utilisateurs de ce système d'authentification mettant en oeuvre le procédé de sécurisation selon l'invention.

Bien sûr, l'invention n'est pas limitée aux exemples qui viennent d'être décrits et de nombreux aménagements peuvent être apportés à ces exemples sans sortir du cadre de l'invention. En particulier, le procédé de sécurisation selon l'invention peut aussi concerner les équipements mobiles d'accès à Internet utilisant la technologie WAP (Wired Access protocole). On pourra aussi prévoir que sur un même équipement mobile soient accessibles un premier réseau de communication mobile WAP procurant un accès à Internet et un second réseau de communication mobile procurant le vecteur de transmission des mots de passe transmis par un site mettant en oeuvre le procédé de sécurisation selon l'invention.

## Revendications

1. Procédé de sécurisation d'accès à un serveur informatique depuis un site client **(1)** via au moins un premier réseau de communication, ce serveur comprenant des moyens pour gérer un protocole d'authentification d'un utilisateur du site client, comprenant une séquence de réception et le traitement **(20)** de données d'identification d'un utilisateur du site client, et une séquence de transmission **(22)** d'un message **(MPA)** depuis le site serveur vers un équipement de communication **(5)** détenu par l'utilisateur du site client via un second réseau de communication **(6), caractérisé en ce que** ce message transmis **(MPA)** est un message vocal fournissant audit utilisateur des moyens pour générer un mot de passe d'authentification **(MPAUT)** prévu pour être transmis audit site serveur via l'un ou l'autre desdits premier ou second réseaux de communication, le numéro d'appel dudit équipement de communication étant recherché dans une base de données d'authentification **(BDA).**

2. Procédé de sécurisation selon la revendication 1, **caractérisé en ce qu'**il comprend les étapes consistant à :
- demander au site client des données d'identification (ID,MPC) via le premier réseau de communication (4) ;
- traiter lesdites données (ID,MPC) et rechercher dans la base de données d'authentification (BDA) un numéro d'appel d'un équipement de communication mobile détenu par l'utilisateur du site client ;
- appeler ledit équipement de communication mobile via au moins un second réseau de communication ;
- après établissement d'une communication avec ledit équipement de communication mobile, générer un mot de passe aléatoire ou pseudo-aléatoire (MPA) ;
- émettre un message vocal comprenant ledit mot de passe aléatoire (MPA) via le second réseau de communication (6) ;
- demander à l'utilisateur de fournir, à partir du site client via le premier réseau de communication (4), un mot de passe d'authentification (MPAUT) dérivé dudit mot de passe aléatoire ou pseudo-aléatoire (MPA) ; et
- authentifier ledit mot de passe d'authentification (MPAUT).

3. Procédé selon la revendication 2, **caractérisé en ce que** le mot de passe d'authentification (MPAUT) correspond au mot de passe aléatoire ou pseudo-aléatoire (MPA) généré par le serveur et communiqué via l'équipement de communication mobile.

4. Procédé selon la revendication 2, **caractérisé en ce que** le mot de passe d'authentification (MPAUT) est constitué par le mot de passe aléatoire ou pseudo-aléatoire (MPA) généré par le serveur et communiqué via l'équipement de communication mobile, auquel est appliquée une clé connue du client utilisateur et comprise dans la base de donnée d'authentification du serveur (BDA), l'étape d'authentification comportant une étape de conversion dudit mot de passe d'authentification en mot de passe aléatoire ou pseudo-aléatoire (MPA) par application de ladite clé.

5. Procédé selon l'une des revendications précédentes, **caractérisé en ce que** les données d'identification demandées au client consistent en un couple [code d'identification / mot de passe client] (ID/MPC).

6. Procédé selon l'une des revendications précédentes, **caractérisé en ce que** l'étape qui consiste à demander au client le mot de passe d'authentification (MPAUT) se déroule pendant une durée prédéterminée au delà de laquelle l'authentification est refusée.

7. Procédé de sécurisation selon la revendication 1, **caractérisé en ce qu'**il comprend les étapes côté site serveur consistant à :
- demander au site client des données d'identification (ID,MPC) via le premier réseau de communication (4) ;
- traiter lesdites données (ID,MPC) et rechercher dans une base de données d'authentification (BDA) un numéro d'appel d'un équipement de communication mobile détenu par l'utilisateur du site client ;
- appeler ledit équipement de communication mobile via au moins un second réseau de communication ;
- en cas d'obtention de la communication avec ledit équipement de communication mobile, émettre un message vocal requérant l'envoi par l'utilisateur d'une clé de cryptage ;
- recevoir et reconnaître la clé de cryptage transmise par le client via des touches de l'équipement de communication mobile;
- décrypter à l'aide de ladite clé de cryptage un mot de passe d'authentification (MPAUT) transmis par le client via le premier réseau de communication, ce mot de passe d'authentification résultant d'un cryptage d'un mot de passe client réalisé sur le site client au moyen de la clé de cryptage ; et
- authentifier le mot de passe client (MPC) résultant du décryptage du mot de passe d'authentification.

8. Procédé selon la revendication 7, **caractérisé en ce que** l'étape de réception de la clé de cryptage se déroule pendant une durée prédéterminée au delà de laquelle l'authentification est refusée.

9. Système de sécurisation d'accès à un serveur informatique depuis un site client **(1)** via au moins un premier réseau de communication, mettant en oeuvre le procédé selon l'une quelconque des revendications précédentes, ce système comprenant sur le site serveur **(7)** des moyens pour gérer un protocole d'authentification d'un utilisateur du site client, des moyens pour recevoir et traiter des données d'identification d'un utilisateur du site client, et des moyens pour générer et pour transmettre un message **(MPA)** depuis le site serveur vers un équipement de communication **(5)** détenu par l'utilisateur du site client via un second réseau de communication **(6), caractérisé en ce que** ce système est agencé pour transmettre via le second réseau de communication un message vocal **(MPA)** fournissant audit utilisateur des moyens pour générer un mot de passe d'authentification **(MPAUT)** prévu pour être transmis audit site serveur via ledit premier réseau de communication, des moyens étant prévus pour rechercher le numéro d'appel dudit équipement de communication dans une base de données d'authentification **(BDA).**

10. Système de sécurisation selon la revendication 9, comprenant en outre :
- des moyens pour rechercher, en réponse à une réception de données d'identification en provenance d'un site client requérant un accès, dans la base de données d'authentification (BDA) le numéro d'appel d'un équipement de communication mobile détenu par l'utilisateur du site client ;
- des moyens pour appeler ledit équipement de communication mobile via au moins un second réseau de communication ;
- des moyens pour générer un mot de passe aléatoire ou pseudo-aléatoire (MPA), et
- des moyens pour authentifier un mot de passe d'authentification en provenance du site client via le premier réseau de communication,
**caractérisé en ce qu'**il comprend en outre :
- des moyens pour émettre un message vocal comprenant ledit mot de passe aléatoire (MPA) via le second réseau de communication (6), et
- des moyens pour requérir de l'utilisateur dudit site client une fourniture, via le premier réseau de communication (4), d'un mot de passe d'authentification (MPAUT) dérivé dudit mot de passe aléatoire ou pseudo-aléatoire (MPA).

11. Système de sécurisation selon la revendication 9, comprenant :
- des moyens pour demander au site client des données d'identification (ID,MPC) via le premier réseau de communication (4) ;
- des moyens pour traiter lesdites données (ID,MPC) et rechercher dans une base de données d'authentification (BDA) un numéro d'appel d'un équipement de communication mobile détenu par l'utilisateur du site client ;
- des moyens pour appeler ledit équipement de communication mobile via au moins un second réseau de communication ;
- des moyens pour émettre un message vocal requérant l'envoi par l'utilisateur d'une clé de cryptage ;
- des moyens pour recevoir et reconnaître la clé de cryptage transmise par le client via des touches de l'équipement de communication mobile;
- des moyens pour décrypter à l'aide de ladite clé de cryptage un mot de passe d'authentification (MPAUT) transmis par le client via le premier réseau de communication, ce mot de passe d'authentification résultant d'un cryptage d'un mot de passe client réalisé sur le site client au moyen de la clé de cryptage ; et
- des moyens pour authentifier le mot de passe client (MPC) résultant du décryptage du mot de passe d'authentification.

## Claims

1. Process of securing the access to a data processing server from a client site (1) through at least a first communication network, this server comprising means for handling a protocol of authenticating a client site user, comprising a sequence of receiving and processing (20) identification data of a client site user, and a sequence of transmitting (22) a message (MPA) from the server site to a client site user owned communication equipment (5) through a second communication network (6), **characterized in that** this transmitted message (MPA) is a voice message providing to the aforesaid user means for generating an authentication password (MPAUT) intended to be transmitted to the aforesaid server site through either the first or the second communication network, the call number of the aforesaid communication equipment being searched from an authentication data base (BDA).

2. Securing process according to claim 1, **characterized in that** it comprises steps of:
- requesting identification data (ID, MPC) from the client site through the first communication network (4);
- processing the aforesaid data (ID, MPC) and searching the authentication data base (BDA) for a client site user owned mobile communication equipment call number;
- calling the aforesaid mobile communication equipment through at least a second communication network;
- after establishing a communication with the aforesaid mobile communication equipment, generating a random or pseudo random password (MPA);
- sending a voice message comprising the aforesaid random password (MPA) through the second communication network (6);
- requesting the user to provide, from the client site through the first communication network (4) an authentication password (MPAUT) derived from the aforesaid random or pseudo random password (MPA); and
- authenticating the aforesaid authentication password (MPAUT).

3. Process according to claim 2, **characterized in that** the authentication password (MPAUT) matches the server generated random or pseudo random password (MPA) transmitted through the mobile communication equipment.

4. Process according to claim 2, **characterized in that** the authentication password (MPAUT) is built from the random or pseudo random password (MPA) generated by the server and transmitted through the mobile communication equipment, by applying to the random or pseudo random password a client user known key that is embodied within the server authentication data base (BDA), the authentication step comprising a step of converting the aforesaid authentication password into a random or pseudo random authentication password (MPA) by applying the aforesaid key.

5. Process according to any of the previous claims, **characterized in that** the identification data requested from the client consists of a couple [identification code/client password] (ID/MPC).

6. Process according to any of the previous claims, **characterized in that** the step of requesting the authentication password (MPAUT) from the client takes place during a predetermined time-out delay beyond which the authentication is denied.

7. Securing process according to claim 1, **characterized in that** it comprises on the server side the steps of:
- requesting authentication data (ID, MPC) from the client site through the first communication network (4);
- processing the aforesaid data (ID, MPC) and searching an authentication data base (BDA) for a client site user owned mobile communication equipment call number;
- calling the aforesaid mobile communication equipment through at least a second communication network;
- in case the communication is established with the aforesaid mobile communication equipment, send a voice message requesting the user to send an encryption key;
- receiving and recognising the encryption key transmitted by the client by means of the mobile equipment keyboard,
- deciphering by means of the aforesaid encryption key an authentication password (MPAUT) transmitted by the client through the first communication network, this authentication password resulting from the encryption of a client password performed at the client site by means of the encryption key; and
- authenticating the client password (MPC) which results from the authentication password deciphering.

8. Process according to claim 7, **characterized in that** the step of receiving the encryption takes place during a predetermined time-out delay beyond which the authentication is denied.

9. System of securing the access to a data processing server from a client site (1) through at least a first communication network, which implements the process according to either of the previous claims, this system comprising at the server site (7) means for handling a protocol of authenticating of a client site user, means for receiving and processing identification data of a client site user, means for generating and transmitting a message (MPA) from the server site to a client site user owned communication equipment (5) through a second communication network (6), **characterized in that** this system is implemented in order to transmit a voice message (MPA) through the second communication network providing to the aforesaid user means for generating an authentication password (MPAUT) intended to be transmitted to the aforesaid server site through the first communication network, means being provided for searching an authentication data base (BDA) for the call number of the aforesaid communication equipment.

10. Securing system according to claim 9, further comprising:
- means for searching, in response to identification data received from a client site requesting an access, an authentication data base (BDA) for the client site user owned mobile communication equipment call number;
- means for calling this mobile communication equipment through at least a second communication network;
- means for generating a random or pseudo random password (MPA); and
- means for authenticating an authentication password incoming from the client site through the first communication network,
**characterized in that** the system further comprises:
- means for sending a voice message comprising the aforesaid random password (MPA) through the second communication network (6), and
- means for requesting the client site user to provide, through the first communication network (4), an authentication password (MPAUT) derived from the aforesaid random or pseudo random password (MPA).

11. Securing system according to claim 9, further comprising:
- means for requesting the client site for identification data (ID, MPC) through the first communication network (4);
- means for processing the aforesaid data (ID, MPC) and for searching an authentication data base (BDA) a client site user owned mobile communication equipment call number;
- means for calling this mobile communication equipment through at least a second communication network;
- means for sending a voice message which requests the user to send an encryption key,
- means for receiving and recognising the encryption key transmitted by the client by means of the mobile communication equipment keyboard,
- means for deciphering by means of the aforesaid encryption key an authentication password (MPAUT) transmitted by the client through the first communication network, this authentication password resulting from the encryption of a client password performed at the client site by means of the encryption key; and
- means for authenticating the client password (MPC) which results from the authentication password deciphering.

## Patentansprüche

1. Verfahren zur Sicherung des Zugangs zu einem Informatikserver von einer Kundensite (1) über mindestens ein erstes Kommunikationsnetz, wobei dieser Server Mittel zum Verwalten eines Protokolls zur Authentifizierung eines Benutzers der Kundensite umfasst, umfassend eine Sequenz des Empfangs und der Verarbeitung (20) von Daten zur Identifizierung eines Benutzers der Kundensite und eine Sequenz (22) der Übertragung einer Nachricht (MPA) von der Serversite zu einer Kommunikationseinrichtung (5), die im Besitz des Benutzers der Kundensite ist, über ein zweites Kommunikationsnetz (6), **dadurch gekennzeichnet, dass** diese übertragene Nachricht (MPA) eine gesprochene Nachricht ist, die dem Benutzer Mittel zum Erzeugen eines Authentifizierungspassworts (MPAUT) liefert, das vorgesehen ist, um zu dieser Serversite über das eine oder das andere des ersten oder zweiten Kommunikationsnetzes übertragen zu werden, wobei die Rufnummer der Kommunikationseinrichtung in einer Authentifizierungsdatenbasis (BDA) gesucht wird.

2. Sicherungsverfahren nach Anspruch 1, **dadurch gekennzeichnet, dass** es die Schritte umfasst, die bestehen in:
- von der Kundensite Identifizierungsdaten (ID, MPC) über das erste Kommunikationsnetz (4) anfordern;
- die Daten (ID, MPC) verarbeiten und in der Authentifizierungsdatenbasis (BDA) die Rufnummer einer Mobilkommunikationseinrichtung, die im Besitz des Benutzers der Kundensite ist, suchen;
- die Mobilkommunikationseinrichtung über mindestens ein zweites Kommunikationsnetz rufen;
- nach Herstellung einer Verbindung mit der Mobilkommunikationseinrichtung ein zufälliges oder pseudozufälliges Passwort (MPA) erzeugen;
- eine das zufällige Passwort (MPA) umfassende gesprochene Nachricht über das zweite Kommunikationsnetz (6) senden;
- vom Benutzer verlangen, von der Kundensite aus über das erste Kommunikationsnetz (4) ein Authentifizierungspasswort (MPAUT) zu liefern, das von dem zufälligen oder pseudozufälligen Passwort (MPA) abgeleitet ist; und
- das Authentifizierungspasswort (MPAUT) authentifizieren.

3. Verfahren nach Anspruch 2, **dadurch gekennzeichnet, dass** das Authentifizierungspasswort (MPAUT) dem zufälligen oder pseudozufälligen Passwort (MPA) entspricht, das von dem Server erzeugt wurde und über die Mobilkommunikationseinrichtung mitgeteilt wurde.

4. Verfahren nach Anspruch 2, **dadurch gekennzeichnet, dass** das Authentifizierungspasswort (MPAUT) aus dem von dem Server erzeugten und über die Mobilkommunikationseinrichtung mitgeteilten zufälligen oder pseudozufälligen Passwort (MPA) besteht, an das ein dem benutzenden Kunden bekannter Schlüssel angelegt wird, der in der Authentifizierungsdatenbasis des Servers (BDA) enthalten ist, wobei der Authentifizierungsschritt einen Schritt der Umwandlung dieses Authentifizierungspassworts in ein zufälliges oder pseudozufälliges Passwort (MPA) durch Anwendung dieses Schlüssels umfasst.

5. Verfahren nach einem der vorhergehenden Ansprüche, **dadurch gekennzeichnet, dass** die vom Kunden verlangten Identifizierungsdaten in einem Paar [Identifizierungscode/Kundenpasswort] (ID/MPC) bestehen.

6. Verfahren nach einem der vorhergehenden Ansprüche, **dadurch gekennzeichnet, dass** der Schritt, der darin besteht, dass vom Kunden das Authentifizierungspasswort (MPAUT) verlangt wird, während einer vorbestimmten Dauer abläuft, über die hinaus die Authentifizierung verweigert wird.

7. Sicherungsverfahren nach Anspruch 1, **dadurch gekennzeichnet, dass** es auf der Seite der Serversite die Schritte umfasst, die bestehen in:
- von der Kundensite Identifizierungsdaten (ID, MPC) über das erste Kommunikationsnetz (4) verlangen;
- die Daten (ID, MPC) verarbeiten und in einer Authentifizierungsdatenbasis (BDA) eine Rufnummer einer Mobilkommunikationseinrichtung, die im Besitz des Benutzers der Kundensite ist, suchen;
- diese Mobilkommunikationseinrichtung über mindestens ein zweites Kommunikationsnetz rufen;
- im Fall des Erhaltens der Verbindung mit der Mobilkommunikationseinrichtung eine gesprochene Nachricht senden, die die Sendung eines Verschlüsselungsschlüssels durch den Benutzer anfordert;
- den von dem Kunden über Tasten der Mobilkommunikationseinrichtung übertragenen Verschlüsselungsschlüssel empfangen und erkennen;
- mit Hilfe dieses Verschlüsselungsschlüssels ein von dem Kunden über das erste Kommunikationsnetz übertragenes Authentifizierungspasswort (MPAUT) entschlüsseln, wobei dieses Authentifizierungspasswort sich aus einer Verschlüsselung eines Kundenpassworts ergibt, die auf der Kundensite mit Hilfe des Verschlüsselungsschlüssels vorgenommen wurde; und
- das Kundenpasswort (MPC), das sich aus der Entschlüsselung des Authentifizierungspassworts ergibt, authentifizieren.

8. Verfahren nach Anspruch 7, **dadurch gekennzeichnet, dass** der Schritt des Empfangs des Verschlüsselungsschlüssels während einer vorbestimmten Dauer abläuft, über welche hinaus die Authentifizierung verweigert wird.

9. System zur Sicherung des Zugangs zu einem Informatikserver von einer Kundensite (1) über mindestens ein erstes Kommunikationsnetz unter Verwendung des Verfahrens nach einem der vorhergehenden Ansprüche, wobei dieses System auf der Serversite (7) Mittel zum Verwalten eines Protokolls zur Authentifizierung eines Benutzers der Kundensite, Mittel zum Empfangen und Verarbeiten der Identifizierungsdaten eines Benutzers der Kundensite und Mittel zum Erzeugen und zum Übertragen einer Nachricht (MPA) von der Serversite zu einer Kommunikationseinrichtung (5), die im Besitz des Benutzers der Kundensite ist, über ein zweites Kommunikationsnetz (6) umfasst, **dadurch gekennzeichnet, dass** das System ausgebildet ist, um über das zweite Kommunikationsnetz eine gesprochene Nachricht (MPA) zu übertragen, die dem Benutzer Mittel liefert, um ein Authentifizierungspasswort (MPAUT) zu erzeugen, das vorgesehen ist, um zu der Serversite über das erste Kommunikationsnetz übertragen zu werden, wobei Mittel vorgesehen sind, um die Rufnummer der Kommunikationseinrichtung in einer Authentifizierungsdatenbasis (BDA) zu suchen.

10. Sicherungssystem nach Anspruch 9, umfassend außerdem:
- Mittel, um als Antwort auf einen Empfang von Identifizierungsdaten, die von einer einen Zugangverlangenden Kundensite kommen, in der Authentifizierungsdatenbasis (BDA) die Rufnummer einer Mobilkommunikationseinrichtung, die im Besitz des Benutzers der Kundensite ist, zu suchen;
- Mittel, um die Mobilkommunikationseinrichtung über mindestens ein zweites Kommunikationsnetz zu rufen;
- Mittel, um ein zufälliges oder pseudozufälliges Passwort (MPA) zu erzeugen; und
- Mittel, um ein von der Kundensite über das erste Kommunikationsnetz kommendes Authentifizierungspasswort zu authentifizieren, **dadurch gekennzeichnet, dass** es außerdem umfasst:
- Mittel, um eine dieses zufällige Passwort (MPA) umfassende gesprochene Nachricht über das zweite Kommunikationsnetz (6) zu senden, und
- Mittel, um vom Benutzer der Kundensite eine Lieferung eines von dem zufälligen oder pseudozufälligen Passwort (MPA) abgeleiteten Authentifizierungspassworts (MPAUT) über das erste Kommunikationsnetz (4) zu verlangen.

11. Sicherungssystem nach Anspruch 9, umfassend:
- Mittel, um von der Kundensite über das erste Kommunikationsnetz (4) Identifizierungsdaten (ID, MPC) zu verlangen,
- Mittel, um diese Daten (ID, MPC) zu verarbeiten und in einer Authentifizierungsdatenbasis (BDA) eine Rufnummer einer Mobilkommunikationseinrichtung, die im Besitz des Benutzers der Kundensite ist, zu suchen;
- Mittel, um diese Mobilkommunikationseinrichtung über mindestens ein zweites Kommunikationsnetz zu rufen;
- Mittel, um eine gesprochene Nachricht zu senden, die die Sendung eines Verschlüsselungsschlüssels durch den Benutzer verlangt;
- Mittel, um den Verschlüsselungsschlüssel, der von dem Kunden über Tasten der Mobilkommunikationseinrichtung übertragen wird, zu empfangen und zu erkennen;
- Mittel, um mit Hilfe dieses Verschlüsselungsschlüssels ein von dem Kunden über das erste Kommunikationsnetz übertragenes Authentifizierungspasswort (MPAUT) zu entschlüsseln, wobei dieses Authentifizierungspasswort sich aus einer Verschlüsselung eines Kundenpassworts ergibt, die auf der Kundensite mit Hilfe des Verschlüsselungsschlüssels vorgenommen wurde; und
- Mittel, um das sich aus der Entschlüsselung des Authentifizierungspassworts ergebende Kundenpasswort (MPC) zu authentifizieren.
